# EUROPÄISCHE PATENTSCHRIFT

(11) **EP 3 912 256 B1**
(45) Veröffentlichungstag und Bekanntmachung des Hinweises auf die Patenterteilung: **04.03.2026**
(21) Anmeldenummer: 20701310.3
(22) Anmeldetag: 17.01.2020
(51) Int. Cl.: H02K 1/14, H02K 3/28

(54) **ELEKTRISCHER MOTOR**
ELECTRIC MOTOR
MOTEUR ÉLECTRIQUE

(30) Priorität: 18.01.2019 DE 102019101270
(43) Veröffentlichungstag der Anmeldung: 24.11.2021
(73) Patentinhaber: GKN Powder Metallurgy GmbH, 53177 Bonn (DE)
(72) Erfinder: TO, Hong Giang, 40231 Düsseldorf (DE); TILLER, Stefan, 53757 Sankt Augustin (DE); ANDREE, Maurice, 47506 Neukirchen-Vluyn (DE)
(74) Vertreter: karo IP
(86) Internationale Anmeldenummer: PCT/EP2020/051188
(87) Internationale Veröffentlichungsnummer: WO 2020/148449

(56) Entgegenhaltungen:
- EP-A1- 2 590 302
- EP-A1- 2 731 241
- CN-A- 106 961 169
- DE-A1- 102010 011 924
- DE-A1- 102017 011 853
- US-A1- 2012 248 927

## Beschreibung

Die vorliegende Erfindung betrifft einen elektrischen Motor, wobei der elektrische Motor zumindest einen Stator sowie einen Rotor umfasst. Der elektrische Motor ist ein Radialflussmotor (RFM).

Aus der EP 2 072 824 A2 ist ein Elektromotor zur Förderung von gasförmigen oder flüssigen Medien bekannt. Der Stator weist mindestens zwei Statorzähne auf, die zwischen den Statornuten angeordnet sind. Spulen sind in den Statornuten angeordnet. Die Statornuten dienen zumindest teilweise auch als Mediendurchflussöffnung.

Bei der Führung eines Mediums durch die Staturnuten kann es aufgrund der Vielzahl von Öffnungen und der inhomogenen Oberfläche zu einer Verwirbelung des Mediums kommen. Als Gegenmaßnahme könnte der Luftspalt des Motors groß ausgeführt und ausschließlich dieser als Durchflussöffnung genutzt werden. Ein zusätzliches Vergießen kann dabei helfen, die Oberfläche homogen zu halten.

Bei elektrischen Maschinen mit großem Luftspalt ergibt sich aber das Problem, dass große magnetische Streuflüsse auftreten. Bei bekannten Radialflussmotor ist zur Verringerung der Streuflüsse eine aufwendige, verteilte Wicklung vorgesehen. Dieser Ansatz ist kostenintensiv, insbesondere bei Maschinen mit kleinem Bauraum.

Die EP 2 731 241 A1 zeigt einen Radialflussmotor, der zwei Statorzähne aufweist und dessen Wicklungen sich an der inneren und äußeren Umfangsfläche des Stators erstrecken. Dabei erstrecken sich die Wicklungen nicht um die Statorzähne herum, sondern entlang der ringförmigen Umfangsfläche. In jeder Statornut ist also eine eigene Wicklung angeordnet.

Hiervon ausgehend ist es Aufgabe der vorliegenden Erfindung, die mit Bezug auf den Stand der Technik geschilderten Probleme zumindest zu lindern oder gar zu lösen. Insbesondere soll ein elektrischer Motor angegeben werden, der kompakt aufgebaut ist und dabei einen möglichst großen Zwischenraum, also insbesondere einen möglichst großen durchströmbaren Querschnitt, aufweist. Gleichzeitig soll ein möglichst effizienter elektrischer Betrieb des Motors sichergestellt werden. Die magnetischen Streuflüsse sind insbesondere gering zu halten und eine möglichst einfache Wicklung soll realisiert werden.

Zur Lösung dieser Aufgaben wird ein elektrischer Motor gemäß den Merkmalen des Patentanspruchs 1 vorgeschlagen. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein elektrischer Motor vorgeschlagen, zumindest aufweisend einen Rotor mit einer Drehachse und einen den Rotor umgebenden ringförmigen Stator. Der Stator erstreckt sich entlang einer zur Drehachse parallelen axialen Richtung und weist jeweils eine in einander entgegengesetzte axiale Richtungen weisende erste Stirnseite und zweite Stirnseite auf (also eine in eine erste axiale Richtung weisende erste Stirnseite und eine in eine zweite axiale Richtung weisende zweite Stirnseite). Der Stator weist genau bzw. nur zwei Statorzähne auf, die sich ausgehend von einer zwischen den Stirnseiten erstreckenden ringförmigen Umfangsfläche des Stators entlang einer radialen Richtung nach innen hin zum Rotor erstrecken und gegenüber der Drehachse einander gegenüberliegend angeordnet sind (also in einer Umfangsrichtung um 180 Winkelgrad zueinander versetzt). Entlang der Umfangsfläche erstrecken sich zwischen den Statorzähnen eine erste Statornut und eine gegenüber der Drehachse gegenüberliegend angeordnete zweite Statornut. In der ersten Statornut ist mindestens eine erste Wicklung (oder eine Mehrzahl von ersten Wicklungen) und in der zweiten Statornut mindestens eine zweite Wicklung (oder eine Mehrzahl von zweiten Wicklungen) angeordnet, wobei sich jede Wicklung über die Stirnseiten und in der radialen Richtung außen und innen um die Umfangsfläche herum erstreckt.

Gemäß der Erfindung ist die mindestens eine erste Wicklung nur in der ersten Statornut und die mindestens eine zweite Wicklung nur in der zweiten Statornut angeordnet. Der Stator des elektrischen Motors weist insbesondere ein weichmagnetisches Material auf, zum Beispiel ein sogenanntes *"Soft Magnetic Composite"* (SMC), oder eine Kombination aus Elektroblechen und SMC. Das SMC-Material wird hierbei nicht gesintert. Vielmehr erfolgt eine Temperierung auf unterhalb einer Schmelztemperatur, die jedoch ausreichend ist, dass der Stator seine Geometrie dauerhaft bewahrt.

Der Stator weist einen im Wesentlichen ringförmigen Grundkörper (im Folgenden auch als Umfangsfläche bezeichnet) auf, von dem ausgehend sich in der radialen Richtung nach innen zwei Statorzähne erstrecken.

Der Rotor kann einen oder mehrere Permanentmagnete und/oder weichmagnetische Elemente aufweisen. Bevorzugt kann mit Permanentmagneten ein permanenterregter Synchron- oder bürstenloser Gleichstrommotor, abgekürzt BLDC, gebildet werden, während beispielsweise mit weichmagnetischen Elementen ein Reluktanzmotor als elektrischer Motor geschaffen werden kann.

Der Aufbau eines Stators, insbesondere unter Nutzung von SMC sowie weitere Einzelheiten, auch betreffend einen Rotor, geht beispielsweise aus der WO 2016/066714 A1 hervor, so dass die dortigen Erläuterungen auch zum Verständnis oder der Beschreibung des Stators herangezogen werden kann.

Der elektrische Motor weist insbesondere eine elektrische Leistungsaufnahme (also eine maximale Antriebsleistung) von weniger als 20.000 Watt (Nennleistung), bevorzugt von weniger als 1.000 Watt, besonders bevorzugt von weniger als 100 Watt auf.

Nach der Erfindung ist vorgesehen, dass sich die Wicklungen nicht um die Statorzähne herum erstrecken, sondern um die ringförmige Umfangsfläche bzw. den ringförmigen Grundkörper. Die Wicklungen sind entlang der Umfangsrichtung nebeneinander angeordnet, wobei die Wickelrichtung im Wesentlichen entlang der axialen Richtung und entlang der radialen Richtung verläuft. Zumindest wenn die Wicklungen seriell verbunden sind weisen die Wicklungen auch eine Verlaufskomponente in Umfangsrichtung auf.

Insbesondere sind die erste Wicklung und die zweite Wicklung so zueinander angeordnet (bzw. geschaltet), dass sie von einem elektrischen Strom in einander entgegengesetzten Richtungen durchströmbar sind.

Diese bevorzugte Anordnung der Wicklungen ermöglicht, dass ein magnetischer Fluss entlang der ringförmigen Umfangsfläche, also entlang der Umfangsrichtung, und entlang der radialen Richtung durch die Statorzähne leitbar ist.

Insbesondere sind die erste Wicklung und die zweite Wicklung so zueinander angeordnet und elektrisch verschaltet, dass ein magnetischer Fluss, der durch die jeweilige Wicklung im Betrieb (des elektrischen Motors) erzeugbar ist, im Bereich der Statornuten durch die Umfangsfläche entlang einander entgegengesetzter Umfangsrichtungen gerichtet ist und sich im Bereich der Statorzähne aufaddiert und entlang der radialen Richtung über die Statorzähne und den Rotor leitbar ist.

Insbesondere wird der elektrische Motor mit einem einphasigen Strom betrieben.

Gemäß einer ersten Ausgestaltung sind die mindestens eine erste Wicklung und die mindestens eine zweite Wicklung (elektrisch) parallel zueinander verschaltet.

Insbesondere sind die erste Wicklung und die zweite Wicklung voneinander unabhängige Wicklungen.

Gemäß einer zweiten Ausgestaltung sind die mindestens eine erste Wicklung und die mindestens eine zweite Wicklung (elektrisch) seriell miteinander verschaltet. Bevorzugt sind die erste Wicklung und die zweite Wicklung durch eine durchgehende Wicklung gebildet (also einteilig miteinander ausgeführt).

Insbesondere sind in jeder Statornut eine Mehrzahl von Wicklungen angeordnet, wobei zumindest die Wicklungen einer Statornut (also erste Wicklungen in der ersten Statornut oder zweite Wicklungen in der zweiten Statornut) miteinander parallel oder seriell verschaltet sind.

Es ist insbesondere auch möglich nur einen Teil der ersten bzw. zweiten Wicklungen einer Statornut miteinander seriell oder parallel zu schalten, während die anderen ersten bzw. zweiten Wicklungen der Statornut anders verschaltet sind. Es ist auch möglich in der ersten Statornut und in der zweiten Statornut voneinander verschiedene Verschaltungen der Wicklungen vorzunehmen.

Insbesondere sind in beiden Statornuten eine gleiche Anzahl von Wicklungen angeordnet.

Eine Wicklung erstreckt sich zumindest entlang der axialen Richtung entlang der Umfangsflächen und entlang der radialen Richtung über die Stirnseiten des ringförmigen Stators hinweg und dabei über die Stirnseiten und in der radialen Richtung außen und innen um die Umfangsfläche herum. Einzelne Wicklungen sind entlang der Umfangsrichtung benachbart zueinander angeordnet. Die Anordnung der, von einem elektrischen Strom in einander entgegengesetzten Richtungen durchströmten Wicklungen in voneinander durch die zwei Statorzähne getrennten Statornuten ermöglicht, dass der magnetische Fluss entlang der Umfangsrichtung durch den Grundkörper und durch die Wicklung hin zum Statorzahn geleitet wird. Am Statorzahn tritt der magnetische Fluss (bzw. die Feldlinien) aus den Wicklungen der einander gegenüberliegenden Statornuten aus und wird entlang der radialen Richtung durch den Statorzahn hin zum Rotor und über den Rotor hin zum anderen Statorzahn geführt. An diesem anderen Statorzahn wird der magnetische Fluss hin zum Grundkörper geführt und dort in Umfangsrichtung durch die Wicklungen und durch den Grundkörper weitergeleitet. Die unterschiedlichen polarisierten Enden jeder Wicklung bzw. des die mindestens eine Wicklung in der jeweiligen Statornut bildenden elektrischen Leiters sind damit maximal voneinander beabstandet, so ein Streufeld möglichst gering ist. Das eine Ende des elektrischen Leiters einer Statornut ist insbesondere in unmittelbarer Nähe des einen Statorzahns und das andere Ende des elektrischen Leiters in unmittelbarer Nähe des anderen Statorzahns angeordnet.

Insbesondere kann bei dieser Ausführung eines elektrischen Motors ein Streufeld geringgehalten werden, wobei ein Luftspalt zwischen Statorzahn und Rotor besonders groß ausgeführt werden kann. Damit kann der Durchmesser des Rotors klein ausgeführt werden, so dass ein großer Durchströmungsquerschnitt im elektrischen Motor realisierbar ist.

Insbesondere weist der Rotor (in der Umfangsrichtung) mindestens einen (Permanent-)Magneten bzw. mindestens zwei magnetische Pole (an einem Permanentmagneten ausgebildet) auf, der in der radialen Richtung magnetisiert ist. Der Rotor weist insbesondere zwei Pole auf, also einen Nordpol und einen Südpol. Die Pole sind insbesondere entlang der Umfangsrichtung um 180 Winkelgrad zueinander versetzt angeordnet und weisen in einander entgegengesetzte radiale Richtungen.

Insbesondere weist der Rotor zwei Pole auf und ist radial magnetisiert. Insbesondere verlaufen die magnetischen Feldlinien im Bereich jedes Pols entlang der radialen Richtung. Insbesondere verlaufen also (alle) magnetische Feldlinien eines Pols jeweils senkrecht (oder im Wesentlichen senkrecht) zu einer Außenumfangsfläche des Rotors.

Insbesondere ist der Rotor ringförmig ausgestaltet und kann so auf einer Welle angeordnet sein, die sich entlang der Drehachse durch den Rotor erstreckt. Die Pole bilden insbesondere Ringsegmente.

Insbesondere weist der Rotor zwischen den Polen eine Grenzfläche auf, die in einer, sich entlang der axialen Richtung und entlang der radialen Richtung erstreckenden Ebene verläuft und dabei den Rotor insbesondere in zwei Hälften teilt.

Damit kann erreicht werden, dass sich der Rotor in einem Ruhezustand des elektrischen Motors (Wicklungen also stromlos geschaltet) so zu den zwei Statorzähnen ausrichtet, dass sich die magnetischen Feldlinien der Pole des Rotors über die Statorzähne kurzschließen. Der Rotor ist dabei insbesondere so ausgerichtet, dass die Grenzfläche des Rotors in der radialen Richtung mit der Erstreckung der beiden Statorzähne fluchtend angeordnet ist.

In dieser Ausrichtung liegt allerdings auch für den bestromten Zustand des Stators, also im Betrieb des elektrischen Motors ein Drehmomentmaximum vor, so dass selbst für einen Betrieb mit einphasigem Strom ein sehr gutes Anfahrverhalten des elektrischen Motors realisierbar ist.

Insbesondere beträgt ein kleinster Abstand zwischen einer Außenumfangsfläche des Rotors und einer Innenumfangsfläche der Statorzähne mindestens 5 Millimeter, insbesondere mindestens 10 Millimeter, bevorzugt zwischen 5 und 20 Millimetern, besonders bevorzugt zwischen 10 und 15 Millimetern.

Insbesondere erstreckt sich zumindest einer der Statorzähne, bevorzugt beide, besonders bevorzugt beide identisch, ausgehend von einer zwischen den Stirnseiten erstreckenden ringförmigen Umfangsfläche des Stators entlang einer radialen Richtung nach innen hin zum Rotor bis zu einer Innenumfangfläche des Statorzahns. Entlang dieser Erstreckung weist der Statorzahn insbesondere eine Verjüngung gegenüber der Umfangsrichtung auf, d. h. eine sich in der Umfangsrichtung erstreckende Breite des Statorzahns weist zwischen der in der radialen Richtung nach innen weisenden Umfangsfläche des Stators bzw. des Grundkörpers und der Innenumfangsfläche des Statorzahns ein Minimum auf.

Insbesondere ist die Innenumfangsfläche des zumindest einen Statorzahns entlang der Umfangsrichtung breiter ausgeführt als der Bereich des Statorzahns zwischen der Umfangsfläche des Stators und der Verjüngung.

Der Statorzahn erstreckt sich entlang der radialen Richtung und ausgehend von der Umfangsfläche des Stators bzw. vom Grundkörper (bzw. von einem Überstand) über einen ersten Abschnitt hin zur Verjüngung und ausgehend von der Verjüngung über einen zweiten Abschnitt hin zur Innenumfangsfläche.

Insbesondere ist eine sich entlang der Umfangsrichtung ersteckende größte Breite des Statorzahns im Bereich des ersten Abschnitts bis zu 50 % größer als die Breite der Verjüngung. Insbesondere beträgt die größte Breite zwischen mehr als 100 % und 150 %, bevorzugt zwischen 120 % und 150 %, der Breite der Verjüngung. Insbesondere ist die größte Breite im Übergang zwischen der Umfangsfläche bzw. dem ringförmigen Grundkörper und dem Statorzahn angeordnet.

Insbesondere erstreckt sich der zweite Abschnitt in der Umfangsrichtung über einen zweiten Winkelbereich, der einen größten ersten Winkelbereich des ersten Abschnitts um mindestens 20 %, bevorzugt um mindestens 50 %, besonders bevorzugt um mindestens 75 %, besonders bevorzugt um mindestens 100 % oder sogar um mindestens 150 %, übersteigt. Der erste und zweite Winkelbereich wird jeweils insbesondere ausgehend von einer Drehachse des Motors ermittelt.

Insbesondere erstreckt sich der erste Winkelbereich über höchstens 40 Winkelgrad, bevorzugt über höchstens 25 Winkelgrad.

Insbesondere erstreckt sich der zweite Winkelbereich über mindestens 50 Winkelgrad, bevorzugt über mindestens 75 Winkelgrad, besonders bevorzugt über mindestens 80 Winkelgrad.

Insbesondere erstreckt sich der zweite Winkelbereich über höchstens 120 Winkelgrad, bevorzugt über höchstens 100 Winkelgrad.

Der erste Abschnitt bis hin zur Verjüngung erstreckt sich ausgehend von der Umfangsfläche des Stators bzw. des Grundkörpers und entlang der radialen Richtung nach innen insbesondere über die mindestens eine Wicklung hinweg.

Der erste Abschnitt umfasst insbesondere mindestens 40 %, bevorzugt mindestens 60 %, besonders bevorzugt mindestens 75 %, der Erstreckung des Statorzahns entlang der radialen Richtung. Insbesondere umfasst der zweite Abschnitt mindestens 5 % der Erstreckung, bevorzugt mindestens 10 %.

Insbesondere beträgt der kleinste Abstand zwischen einer Außenumfangsfläche des Rotors und einer Innenumfangsfläche zumindest eines Statorzahns mehr als 50 %, insbesondere mehr als 75 %, bevorzugt mehr als 80 %, der Erstreckung des ersten Abschnitts entlang der radialen Richtung. Insbesondere beträgt der kleinste Abstand höchstens 150 %, bevorzugt höchstens 120 %, besonders bevorzugt höchstens 100 % der Erstreckung des ersten Abschnitts entlang der radialen Richtung.

Gemäß der Erfindung beträgt der kleinste Abstand zwischen einer Außenumfangsfläche des Rotors und einer Innenumfangsfläche zumindest eines Statorzahns mehr als 5 %, insbesondere mehr als 15 %, bevorzugt mehr als 20 %, eines größten äußeren Durchmessers der Umfangsfläche des Stators (bzw. des Grundkörpers) entlang der radialen Richtung.

Insbesondere beträgt der kleinste Abstand zwischen einer Außenumfangsfläche des Rotors und einer Innenumfangsfläche zumindest eines Statorzahns weniger als 30 %, insbesondere weniger als 25 %, eines größten äußeren Durchmessers der Umfangsfläche des Stators (bzw. des Grundkörpers) entlang der radialen Richtung.

Insbesondere erstreckt sich zumindest eine der Statornuten, bevorzugt beide, besonders bevorzugt beide identisch, über einen dritten Winkelbereich entlang der Umfangsrichtung von mindestens 120 Winkelgrad, bevorzugt mindestens 150 Winkelgrad und bevorzugt weniger als 180 Winkelgrad. Der dritte Winkelbereich wird insbesondere ausgehend von einer Drehachse des Motors ermittelt.

Insbesondere erstreckt sich die mindestens eine Wicklung, die sich um die Umfangsfläche des Stators erstreckt und nur in der einen Statornut angeordnet ist, über einen Anteil von mindestens 50 %, bevorzugt von mindestens 75 %, besonders bevorzugt mindestens 90 %, dieses dritten Winkelbereichs.

Insbesondere erstreckt sich zumindest einer der Statorzähne, bevorzugt beide, besonders bevorzugt beide identisch, über die mindestens eine Stirnseite (bevorzugt über beide Stirnseiten) hinweg entlang der axialen Richtung und bildet einen Überstand aus. Dieser Überstand gegenüber der mindestens eine Stirnseite des Stators bzw. der Umfangsfläche bzw. des Grundkörpers erstreckt sich insbesondere über die gesamte Erstreckung des zumindest einen Statorzahns entlang der radialen Richtung. Damit kann insbesondere die dem Rotor gegenüberliegende Innenumfangsfläche des zumindest einen Statorzahns vergrößert werden, so dass bei einem gegebenen elektrischen Strom eine magnetische Flussdichte im Bereich der Innenumfangsfläche des zumindest einen Statorzahns verringert und eine magnetische Reluktanz gesenkt werden kann.

Dieser Überstand ist insbesondere dann einfach zu realisieren, wenn der Stator nicht aus Blechstapeln sondern aus SMC-Material hergestellt ist.

Der Überstand erstreckt sich entlang der axialen Richtung insbesondere so weit wie die Wicklungen, die im Bereich der Stirnseiten die sogenannten Wickelköpfe ausbilden. Damit können positive Eigenschaften des elektrischen Motors, z. B. hinsichtlich der magnetischen Reluktanz, realisiert werden, wobei die Baugröße des elektrischen Motors durch den Überstand aber nicht vergrößert wird.

Insbesondere ist eine Lagerung des Rotors entlang der axialen Richtung außerhalb des Stators angeordnet. Insbesondere erstreckt sich der Rotor entlang der axialen Richtung über die Erstreckung des Stators also zumindest über eine Stirnseite hinaus. Insbesondere ist der Rotor über mindestens ein Wälzlager (zumindest gegenüber der radialen Richtung, ggf. zusätzlich gegenüber der axialen Richtung) gelagert. Bevorzugt ist der Rotor an beiden Stirnseiten des Stators (gegenüber einer radialen Richtung) gelagert.

Insbesondere weist der Rotor eine Struktur zur Förderung eines Fluids entlang der axialen Richtung durch einen zwischen dem Rotor und dem Stator gebildeten Zwischenraum auf. Die Struktur erzeugt bei Betrieb des Motors insbesondere eine Verdrängung des Fluids in der axialen Richtung, so dass ein Fluidstrom durch den Zwischenraum erzeugbar ist.

Infolge der Anordnung eines Teils der Wicklungen in der radialen Richtung außerhalb des Zwischenraums bzw. außerhalb des Stators, kann ein Durchströmungsquerschnitt des Motors bzw. des Zwischenraums möglichst groß gestaltet werden. Weiter kann durch das Design des Motors mit nur zwei Statorzähnen der Durchströmungsquerschnitt maximiert werden.

Es wird weiter eine Anordnung vorgeschlagen, zumindest umfassend den beschriebenen Motor und mindestens eine Spannungsquelle. Die mindestens eine erste Wicklung und die zweite Wicklung sind so zueinander angeordnet und so (elektrisch) verschaltet, dass sie von einem elektrischen Strom in einander entgegengesetzten Richtungen durchströmbar sind.

Insbesondere sind die erste Wicklung und die zweite Wicklung so zueinander angeordnet und elektrisch verschaltet, dass ein magnetischer Fluss, der durch die jeweilige Wicklung im Betrieb des elektrischen Motors erzeugbar ist, im Bereich der Statornuten durch die Umfangsfläche entlang einander entgegengesetzter Umfangsrichtungen gerichtet ist und sich im Bereich der Statorzähne aufaddiert und entlang der radialen Richtung über die Statorzähne und den Rotor leitbar ist.

Die Ausführungen zu dem Motor gelten insbesondere gleichermaßen für die Anordnung und umgekehrt.

Vorsorglich sei angemerkt, dass die hier verwendeten Zahlwörter ("erste", "zweite", "dritte", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: eine Anordnung mit einem elektrischen Motor in perspektivischer Ansicht, teilweise im Schnitt;
- Fig. 2:: den elektrischen Motor der Anordnung nach Fig. 1 in einer Ansicht entlang der Drehachse;
- Fig. 3:: den elektrischen Motor nach Fig. 2 in einer Ansicht entlang der Drehachse mit einem Verlauf des magnetischen Flusses;
- Fig. 4:: den elektrischen Motor nach Fig. 2 und 3 in perspektivischer Ansicht; und
- Fig. 5:: ein Diagramm.

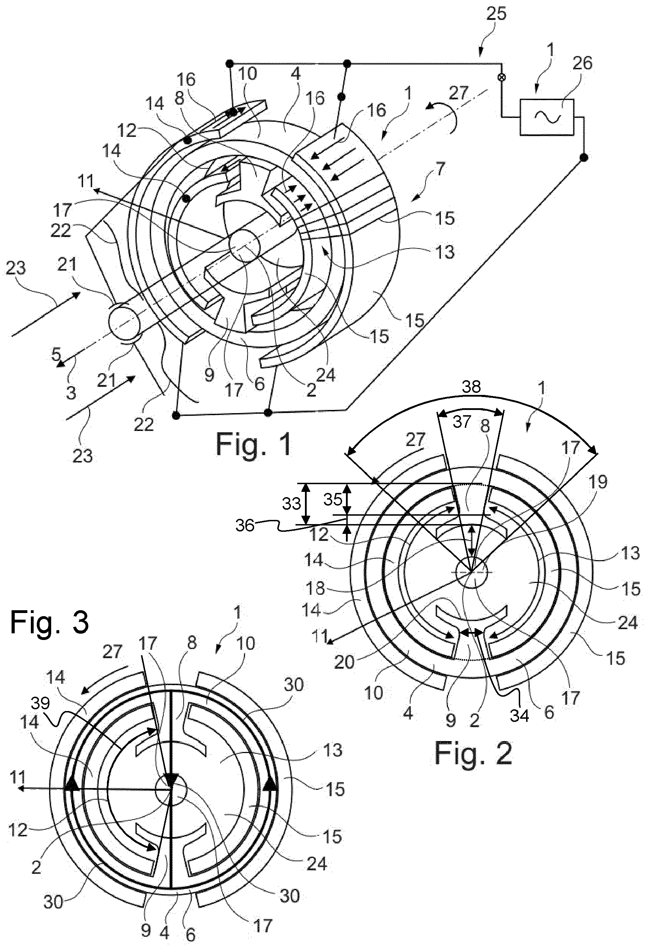

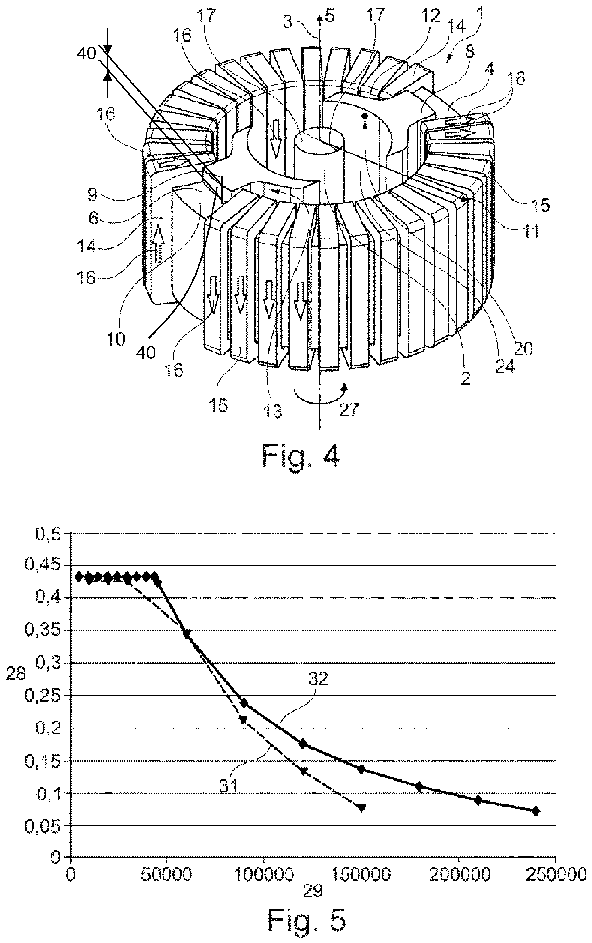

Fig. 1 zeigt eine Anordnung 25 mit einem elektrischen Motor 1 in perspektivischer Ansicht, teilweise im Schnitt. Fig. 2 zeigt den elektrischen Motor 1 der Anordnung 25 nach Fig. 1 in einer Ansicht entlang der Drehachse 3. Fig. 3 zeigt den elektrischen Motor 1 nach Fig. 2 in einer Ansicht entlang der Drehachse 3 mit einem Verlauf des magnetischen Flusses 30. Fig. 4 zeigt den elektrischen Motor 1 nach Fig. 2 und 3 in perspektivischer Ansicht. Die Fig. 1 bis 4 werden im Folgenden gemeinsam beschrieben.

Der elektrische Motor 1 umfasst einen Rotor 2 mit einer Drehachse 3 und einen den Rotor 2 umgebenden ringförmigen Stator 4, der koaxial zum Rotor 2 angeordnet ist. Der Stator 4 erstreckt sich entlang einer zur Drehachse 3 parallelen axialen Richtung 5 und weist jeweils eine in einander entgegengesetzte axiale Richtungen 5 weisende erste Stirnseite 6 und zweite Stirnseite 7 auf. Der Stator 4 weist genau zwei Statorzähne 8, 9 auf, die sich ausgehend von einer zwischen den Stirnseiten 5, 6 erstreckenden ringförmigen Umfangsfläche 10 des Stators 4 entlang einer radialen Richtung 11 nach innen hin zum Rotor 2 erstrecken und gegenüber der Drehachse 3 einander gegenüberliegend angeordnet sind (also in einer Umfangsrichtung 27 um 180 Winkelgrad zueinander versetzt). Entlang der Umfangsfläche 10 erstrecken sich zwischen dem ersten Statorzahn 8 und dem zweiten Statorzahn 9 eine erste Statornut 12 und eine gegenüber der Drehachse 3 gegenüberliegend angeordnete zweite Statornut 13. In der ersten Statornut 12 ist eine Mehrzahl von ersten Wicklungen 14 und in der zweiten Statornut 13 eine Mehrzahl von zweiten Wicklungen 15 angeordnet, wobei sich jede Wicklung 14 über die Stirnseiten 6, 7 und in der radialen Richtung 11 außen und innen um die Umfangsfläche 10 herum erstreckt. In den Fig. 1 bis 3 sind die Teile jeder Wicklungen 14, 15, die sich entlang der radialen Richtung 11 entlang der Stirnseiten 6, 7 erstrecken, weggeschnitten und damit nicht dargestellt. Die vollständigen Wicklungen 14, 15 sind nur in Fig. 4 dargestellt.

Die Wicklungen 14, 15 erstrecken sich nicht um die Statorzähne 8, 9 herum, sondern nur um die ringförmige Umfangsfläche 10. Einzelne Wicklungen 14, 15 sind entlang der Umfangsrichtung 27 benachbart zueinander angeordnet.

Die ersten Wicklung 14 und die zweiten Wicklungen 14, 15 sind so zueinander angeordnet und elektrisch verschaltet, dass ein magnetischer Fluss 30, der durch die jeweilige Wicklung 14, 15 im Betrieb des elektrischen Motors 1 erzeugbar ist, im Bereich der Statornuten 12, 13 durch die Umfangsfläche 10 (den Grundkörper des Stators 4) entlang einander entgegengesetzter Umfangsrichtungen 27 gerichtet und sich im Bereich der Statorzähne 8, 9 aufaddiert und entlang der radialen Richtung 11 über die Statorzähne 8, 9 und den Rotor 2 leitbar ist (siehe Fig. 1, 3 und 4).

Hier sind die ersten Wicklungen 14 und die zweiten Wicklungen 15 parallel zueinander verschaltet. Die ersten Wicklungen 14 und die zweiten Wicklungen 15 sind voneinander unabhängige Wicklungen 14, 15.

In jeder Statornut 12, 13 sind eine Mehrzahl von Wicklungen 14, 15 angeordnet, wobei die Wicklungen 14, 15 einer Statornut 12, 13 (also erste Wicklungen 14 in der ersten Statornut 12 oder zweite Wicklungen 15 in der zweiten Statornut 13) miteinander seriell verschaltet sind (siehe Andeutung in Fig. 1). Die ersten Wicklungen 14 sind hier also miteinander seriell verschaltet. Weiter sind die zweiten Wicklungen 15 miteinander seriell verschaltet. Die ersten Wicklungen 14 und die zweiten Wicklungen 15 sind zueinander parallel verschaltet.

Hier sind in beiden Statornuten 12, 13 eine gleiche Anzahl von Wicklungen 14, 15 angeordnet.

Eine Wicklung 14, 15 erstreckt sich zumindest entlang der axialen Richtung 5 entlang der Umfangsflächen 10 (also außen und innen von der Umfangsfläche 10) und entlang der radialen Richtung 11 über die Stirnseiten 6, 7 des ringförmigen Stators 4 hinweg und dabei über die Stirnseiten 6, 7 und in der radialen Richtung 11 außen und innen um die Umfangsfläche 10 herum.

Die Anordnung der, von einem elektrischen Strom 16 in einander entgegengesetzten Richtungen durchströmten Wicklungen 14, 15 in voneinander durch die zwei Statorzähne 8, 9 getrennten Statornuten 12, 13 ermöglicht, dass die Magnetfeldlinien (bzw. der magnetische Fluss 30) entlang der Umfangsrichtung 27 durch den Grundkörper des Stators 4 und durch die Wicklung 14, 15 hin zum Statorzahn 8, 9 geleitet werden. Am ersten Statorzahn 8 treten die Magnetfeldlinien (der magnetische Fluss 30) aus den Wicklungen 14, 15 der einander gegenüberliegenden Statornuten 12, 13 aus und werden entlang der radialen Richtung 11 durch den ersten Statorzahn 8 hin zum Rotor 2 und über den Rotor 2 hin zum zweiten Statorzahn 9 geführt. An diesem zweiten Statorzahn 9 werden die Magnetfeldlinien (der magnetische Fluss 30) hin zum Grundkörper des Stators 4 geführt und dort in Umfangsrichtung 27 durch die Wicklungen 14, 15 und durch den Grundkörper des Stators 4 weitergeleitet. Die unterschiedlichen polarisierten Enden jeder Wicklung 14, 15 bzw. des die mindestens eine Wicklung 14, 15 in der jeweiligen Statornut 12, 13 bildenden elektrischen Leiters sind damit maximal voneinander beabstandet, so ein Streufeld möglichst gering ist. Das eine Ende des elektrischen Leiters einer Statornut ist insbesondere in unmittelbarer Nähe des einen Statorzahns 8, 9 und das andere Ende in unmittelbarer Nähe des anderen Statorzahns 9, 8 (siehe Fig. 1) angeordnet.

Bei dieser Ausführung eines elektrischen Motors 1 kann ein Streufeld geringgehalten werden, wobei ein Luftspalt bzw. Abstand 18 zwischen Statorzahn 8, 9 und Rotor 2 besonders groß ausgeführt werden kann. Damit kann der Durchmesser des Rotors 2 klein ausgeführt werden, so dass der Zwischenraum 24 des Motors 1 mit einem großen Durchströmungsquerschnitt realisierbar ist.

Die Statorzähne 8, 9 erstrecken sich ausgehend von einer zwischen den Stirnseiten 6, 7 erstreckenden ringförmigen Umfangsfläche 10 des Stators 4 entlang einer radialen Richtung 11 nach innen hin zum Rotor 2 bis zu einer Innenumfangfläche 20 des Statorzahns 8, 9. Entlang dieser Erstreckung 33 weist der Statorzahn 8, 9 eine Verjüngung 34 gegenüber der Umfangsrichtung 27 auf, d. h. eine sich in der Umfangsrichtung 27 erstreckende Breite des Statorzahns 8, 9 weist zwischen der in der radialen Richtung 11 nach innen weisenden Umfangsfläche 10 des Stators 4 und der Innenumfangsfläche 20 des Statorzahns 8, 9 ein Minimum auf.

Die Innenumfangsfläche 20 der Statorzähne 8, 9 ist entlang der Umfangsrichtung 27 breiter ausgeführt als der Bereich des Statorzahns 8, 9 zwischen der Umfangsfläche 10 des Stators 4 und der Verjüngung 34.

Der Statorzahn 8, 9 erstreckt sich entlang der radialen Richtung 11 und ausgehend von der Umfangsfläche 10 des Stators 4 über einen ersten Abschnitt 35 hin zur Verjüngung 34 und ausgehend von der Verjüngung 34 über einen zweiten Abschnitt 36 hin zur Innenumfangsfläche 20.

Der zweite Abschnitt 36 erstreckt sich in der Umfangsrichtung 27 über einen zweiten Winkelbereich 38 von ca. 90 Winkelgrad, der einen größten ersten Winkelbereich 37 von ca. 30 Winkelgrad des ersten Abschnitts 35 um ca. 200 % übersteigt. Der Winkelbereich 37, 38 wird ausgehend von einer Drehachse 3 des Motors 1 ermittelt.

Der erste Abschnitt 35 bis hin zur Verjüngung 34 erstreckt sich ausgehend von der Umfangsfläche 10 des Stators 4 und entlang der radialen Richtung 11 nach innen über die Wicklungen 14, 15 hinweg.

Der erste Abschnitt 35 umfasst ca. 75 % der Erstreckung 33 des Statorzahns 8, 9 entlang der radialen Richtung 11.

Die beiden Statornuten 12, 13 erstrecken sich jeweils über einen dritten Winkelbereich 39 von ca. 150 Winkelgrad entlang der Umfangsrichtung 27.

Die mindestens eine Wicklung 14, 15, die sich um die Umfangsfläche 10 des Stators 4 erstreckt und nur in der einen Statornut 12, 13 angeordnet ist, erstreckt sich über einen Anteil von ca. 97 % dieses dritten Winkelbereichs 39.

Der Rotor 2 weist (entlang der Umfangsrichtung 27 nebeneinander) zwei Pole 17 eines Permanentmagneten auf, die jeweils in der radialen Richtung 11 magnetisiert sind (siehe Fig. 2). Die Pole 17 sind entlang der Umfangsrichtung 27 um 180 Winkelgrad zueinander versetzt angeordnet und weisen in einander entgegengesetzte radiale Richtungen 11. Die Pole 17 sind durch eine Grenzfläche voneinander getrennt, die sich hier (gestrichelte Linie in Fig. 2) quer zu einer Erstreckung 33 der Statorzähne 8, 9 erstreckt.

Ein kleinster Abstand 18 zwischen einer Außenumfangsfläche 19 des Rotors 2 und einer Innenumfangsfläche 20 der Statorzähne 8, 9 beträgt mindestens 5 Millimeter.

In Fig. 1 und 4 ist erkennbar, dass sich die Statorzähne 8, 9 über beide Stirnseiten 6, 7 hinweg entlang der axialen Richtung 5 erstrecken und dabei an jeder Stirnseite 6, 7 einen Überstand 40 ausbilden. Dieser Überstand 40 erstreckt sich über die gesamte Erstreckung 33 des jeweiligen Statorzahns 8, 9 entlang der radialen Richtung 11. Damit kann die dem Rotor 2 gegenüberliegende Innenumfangsfläche 20 des jeweiligen Statorzahns 8, 9 vergrößert werden, so dass bei einem gegebenen elektrischen Strom eine magnetische Flussdichte im Bereich der Innenumfangsfläche 20 der Statorzähne 8, 9 verringert und eine magnetische Reluktanz gesenkt werden kann.

Eine Lagerung 21 des Rotors 2 ist entlang der axialen Richtung 5 außerhalb des Stators 4 angeordnet. Der Rotor 2 erstreckt sich entlang der axialen Richtung 5 (aber insbesondere nicht die Pole 17 des Magneten) über die Erstreckung des Stators 4, also zumindest über eine Stirnseite 6, 7, hier die erste Stirnseite 6, hinaus.Ggf. können sich auch die Pole 17 über die Erstreckung des Stators 4 hinaus erstrecken, so dass ein mögliches Drehmoment erhöht werden kann.

Der Rotor 2 weist eine Struktur 22 zur Förderung eines Fluids 23 entlang der axialen Richtung 5 durch einen zwischen dem Rotor 2 und dem Stator 4 gebildeten Zwischenraum 24 auf. Die Struktur 23 erzeugt bei Betrieb des Motors 1 eine Verdrängung des Fluids 23 in der axialen Richtung 5, so dass ein Fluidstrom durch den Zwischenraum 24 erzeugbar ist.

Die in Fig. 1 dargestellte Anordnung 25 umfasst den Motor 1 und eine Spannungsquelle 26. Die Spannungsquelle 26 ist insbesondere eine Sinusquelle (und keine DC-Quelle) bzw. eine schaltbare Spannungsquelle bzw. Leistungselektronik. Die Mehrzahl erste Wicklungen 14 und die Mehrzahl zweite Wicklungen 15 sind so zueinander angeordnet und so verschaltet, dass sie von einem elektrischen Strom 16 in einander entgegengesetzten Richtungen durchströmbar sind, so dass ein magnetischer Fluss 30 ausgehend von den Polen 17 des Magneten in der radialen Richtung 11 über die Statorzähne 8, 9 in die Umfangsfläche 10 des Stators 4 und entlang der Umfangsrichtung 27 durch die Umfangsfläche 10 des Stators 4 geleitet wird.

Fig. 5 zeigt ein Diagramm. An der horizontalen Achse ist eine Drehzahl 29 in Umdrehungen pro Minute des elektrischen Motors 1 aufgetragen. An der vertikalen Achse ist ein von dem elektrischen Motor 1 erzeugbares Drehmoment 28 in Newtonmeter aufgetragen. Der erste Verlauf 31 zeigt das Drehmoment 28 eines anders aufgebauten elektrischen Motors 1. Der zweite Verlauf 32 zeigt das in fast allen Betriebspunkten höhere erreichbare Drehmoment 28 des hier beschriebenen elektrischen Motors 1.

### Bezugszeichenliste

- 1: Motor
- 2: Rotor
- 3: Drehachse
- 4: Stator
- 5: axiale Richtung
- 6: erste Stirnseite
- 7: zweite Stirnseite
- 8: erster Statorzahn
- 9: zweiter Statorzahn
- 10: Umfangsfläche
- 11: radiale Richtung
- 12: erste Statornut
- 13: zweite Statornut
- 14: erste Wicklung
- 15: zweite Wicklung
- 16: Strom [Ampere], also [A]
- 17: Pol
- 18: Abstand
- 19: Außenumfangsfläche
- 20: Innenumfangsfläche
- 21: Lagerung
- 22: Struktur
- 23: Fluid
- 24: Zwischenraum
- 25: Anordnung
- 26: Spannungsquelle
- 27: Umfangsrichtung
- 28: Drehmoment [Newtonmeter], also [Nm]
- 29: Drehzahl [Umdrehung pro Minute], also [U/min]
- 30: Magnetischer Fluss [Teslaquadrameter], also [T*m²]
- 31: erster Verlauf
- 32: zweiter Verlauf
- 33: Erstreckung
- 34: Verjüngung
- 35: erster Abschnitt
- 36: zweiter Abschnitt
- 37: erster Winkelbereich
- 38: zweiter Winkelbereich
- 39: dritter Winkelbereich
- 40: Überstand

## Patentansprüche

1. Elektrischer Motor (1), zumindest aufweisend einen Rotor (2) mit einer Drehachse (3) und einen den Rotor (2) umgebenden ringförmigen Stator (4), der sich entlang einer zur Drehachse (3) parallelen axialen Richtung (5) erstreckt und jeweils eine in einander entgegengesetzte axiale Richtungen (5) weisende erste Stirnseite (6) und zweite Stirnseite (7) aufweist; wobei der Stator (4) genau zwei Statorzähne (8, 9) aufweist, die sich ausgehend von einer zwischen den Stirnseiten (6, 7) erstreckenden ringförmigen Umfangsfläche (10) des Stators (4) entlang einer radialen Richtung (11) nach innen hin zum Rotor (2) erstrecken und gegenüber der Drehachse (3) einander gegenüberliegend angeordnet sind, wobei sich entlang der Umfangsfläche (10) zwischen den Statorzähnen (8, 9) eine erste Statornut (12) und eine gegenüber der Drehachse (3) gegenüberliegend angeordnete zweite Statornut (13) erstrecken; wobei in der ersten Statornut (12) mindestens eine erste Wicklung (14) und in der zweiten Statornut (13) mindestens eine zweite Wicklung (15) angeordnet ist, wobei sich jede Wicklung (14, 15) über die Stirnseiten (6, 7) und in der radialen Richtung (11) außen und innen um die ringförmige Umfangsfläche (10) herum erstreckt; **dadurch gekennzeichnet, dass** ein kleinster Abstand (18) zwischen einer Außenumfangsfläche (19) des Rotors (2) und einer Innenumfangsfläche (20) zumindest eines Statorzahns (8, 9) mehr als 5 % eines größten äußeren Durchmessers der Umfangsfläche (10) des Stators (4) entlang der radialen Richtung (11) beträgt.

2. Motor (1) nach Patentanspruch 1, wobei die erste Wicklung (14) und die zweite Wicklung (15) so zueinander angeordnet und elektrisch verschaltet sind, dass ein magnetischer Fluss (30), der durch die jeweilige Wicklung (14, 15) im Betrieb erzeugbar ist, im Bereich der Statornuten (12, 13) durch die Umfangsfläche (10) entlang einander entgegengesetzter Umfangsrichtungen (27) gerichtet ist und sich im Bereich der Statorzähne (8, 9) aufaddiert und entlang der radialen Richtung (11) über die Statorzähne (8, 9) und den Rotor (2) leitbar ist.

3. Motor (1) nach Patentanspruch 2, wobei die mindestens eine erste Wicklung (14) und die mindestens eine zweite Wicklung (15) parallel zueinander verschaltet sind.

4. Motor (1) nach Patentanspruch 2, wobei die mindestens eine erste Wicklung (14) und die mindestens eine zweite Wicklung (15) seriell miteinander verschaltet sind.

5. Motor (1) nach einem der vorhergehenden Patentansprüche, wobei in jeder Statornut (12, 13) eine Mehrzahl von Wicklungen (14, 15) angeordnet sind, wobei zumindest die Wicklungen (14, 15) einer Statornut (12, 13) miteinander parallel oder seriell verschaltet sind.

6. Motor (1) nach einem der vorhergehenden Patentansprüche, wobei sich zumindest ein Statorzahn (8, 9) ausgehend von der ringförmigen Umfangsfläche (10) entlang einer radialen Richtung (11) nach innen hin zum Rotor (2) und bis zu einer Innenumfangfläche (20) des Statorzahns (8, 9) erstreckt und entlang dieser Erstreckung (33) eine Verjüngung (34) gegenüber einer Umfangsrichtung (27) aufweist.

7. Motor (1) nach einem der vorhergehenden Patentansprüche, wobei ein kleinster Abstand (18) zwischen einer Außenumfangsfläche (19) des Rotors (2) und einer Innenumfangsfläche (20) der Statorzähne (8, 9) zwischen 5 und 20 Millimetern beträgt.

8. Motor (1) nach einem der vorhergehenden Patentansprüche, wobei zumindest einer der Statorzähne (8, 9) sich über die mindestens eine Stirnseite (6, 7) hinweg entlang der axialen Richtung (5) erstreckt und einen Überstand (40) ausbildet.

9. Motor (1) nach einem der vorhergehenden Patentansprüche, wobei der Rotor (2) eine Struktur (22) zur Förderung eines Fluids (23) entlang der axialen Richtung (5) durch einen zwischen dem Rotor (2) und dem Stator (4) gebildeten Zwischenraum (24) aufweist.

10. Anordnung (25), zumindest umfassend einen Motor (1) nach einem der vorhergehenden Patentansprüche und mindestens eine Spannungsquelle (26), wobei die erste Wicklung (14) und die zweite Wicklung (15) so zueinander angeordnet und so verschaltet sind, dass sie von einem elektrischen Strom (16) in einander entgegengesetzten Richtungen durchströmbar sind.

## Claims

1. Electric motor (1), at least having a rotor (2) with a rotation axis (3) and having an annular stator (4) which surrounds the rotor (2), extends along an axial direction (5) that is parallel to the rotation axis (3) and respectively has a first end side (6) and a second end side (7) that point in opposite axial directions (5); wherein the stator (4) has precisely two stator teeth (8, 9) which, starting from an annular circumferential surface (10) of the stator (4), which circumferential surface extends between the end sides (6, 7), extend along a radial direction (11) inward toward the rotor (2) and are arranged opposite one another with respect to the rotation axis (3), wherein a first stator slot (12) and a second stator slot (13), which is arranged opposite with respect to the rotation axis (3), extend along the circumferential surface (10) between the stator teeth (8, 9); wherein at least one first winding (14) is arranged in the first stator slot (12) and at least one second winding (15) is arranged in the second stator slot (13), wherein each winding (14, 15) extends over the end sides (6, 7) and on the outside and on the inside in the radial direction (11) around the annular circumferential surface (10); **characterized in that** the smallest distance (18) between an outer circumferential surface (19) of the rotor (2) and an inner circumferential surface (20) of at least one stator tooth (8, 9) is more than 5% of a largest outer diameter of the circumferential surface (10) of the stator (4) along the radial direction (11).

2. Motor (1) as claimed in claim 1, wherein the first winding (14) and the second winding (15) are arranged in relation to one another and electrically connected to one another such that a magnetic flux (30), which can be generated by the respective winding (14, 15) during operation, is directed through the circumferential surface (10) along opposite circumferential directions (27) in the region of the stator slots (12, 13) and is added up in the region of the stator teeth (8, 9) and can be conducted across the stator teeth (8, 9) and the rotor (2) along the radial direction (11).

3. Motor (1) as claimed in claim 2, wherein the at least one first winding (14) and the at least one second winding (15) are connected to one another in parallel.

4. Motor (1) as claimed in claim 2, wherein the at least one first winding (14) and the at least one second winding (15) are connected to one another in series.

5. Motor (1) as claimed in one of the preceding claims, wherein a plurality of windings (14, 15) are arranged in each stator slot (12, 13), wherein at least the windings (14, 15) of one stator slot (12, 13) are connected to one another in parallel or in series.

6. Motor (1) as claimed in one of the preceding claims, wherein at least one stator tooth (8, 9), starting from the annular circumferential surface (10), extends along a radial direction (11) inward toward the rotor (2) and as far as an inner circumferential surface (20) of the stator tooth (8, 9) and, along this extent (33), has a tapered portion (34) with respect to a circumferential direction (27).

7. Motor (1) as claimed in one of the preceding claims, wherein a smallest distance (18) between an outer circumferential surface (19) of the rotor (2) and an inner circumferential surface (20) of the stator teeth (8, 9) is between 5 and 20 millimeters.

8. Motor (1) as claimed in one of the preceding claims, wherein at least one of the stator teeth (8, 9) extends beyond the at least one end side (6, 7) along the axial direction (5) and forms a projection (40).

9. Motor (1) as claimed in one of the preceding claims, wherein the rotor (2) has a structure (22) for conveying a fluid (23) along the axial direction (5) through an intermediate space (24) formed between the rotor (2) and the stator (4).

10. Arrangement (25), at least comprising a motor (1) as claimed in one of the preceding claims and at least one voltage source (26), wherein the first winding (14) and the second winding (15) are arranged in relation to one another and connected such that an electric current (16) can flow through them in opposite directions.

## Revendications

1. Moteur électrique (1), comportant au moins un rotor (2) avec un axe de rotation (3) et un stator annulaire (4) entourant le rotor (2), qui s'étend le long d'une direction axiale (5) parallèle à l'axe de rotation (3) et comporte respectivement une première face frontale (6) et une deuxième face frontale (7) pointant dans des directions axiales mutuellement opposées (5) ; le stator (4) comportant exactement deux dents (8, 9) de stator, qui s'étendent en partant d'une surface périphérique (10) annulaire, s'étendant entre les faces frontales (6, 7), du stator (4) le long d'une direction radiale (11) vers l'intérieur en direction du rotor (2) et sont disposées en vis-à-vis par rapport à l'axe de rotation (3), une première encoche (12) de stator et une deuxième encoche de stator (13) disposée en vis-à-vis par rapport à l'axe de rotation (3) s'étendant le long de la surface périphérique (10) entre les dents de stator (8, 9) ; au moins un premier enroulement (14) étant disposé dans la première encoche (12) de stator et au moins un deuxième enroulement (15) étant disposé dans la deuxième encoche 13) de stator, chaque enroulement (14, 15) s'étendant sur les faces frontales (6, 7) et vers l'extérieur et vers l'intérieur dans la direction radiale (11) autour de la surface périphérique annulaire (10) ; **caractérisé en ce qu'**une distance minimale (18) entre une surface périphérique extérieure (19) du rotor (2) et une surface périphérique intérieure (20) d'au moins une dent (8, 9) de stator est supérieure à 5 % d'un diamètre extérieur maximal de la surface périphérique (10) du stator (4) le long de la direction radiale (11).

2. Moteur (1) selon la revendication 1, le premier enroulement (14) et le deuxième enroulement (15) étant disposés l'un par rapport à l'autre et connectés électriquement de telle sorte qu'un flux magnétique (30) pouvant être généré par l'enroulement (14, 15) respectif lors du fonctionnement est dirigé dans la zone des encoches (12, 13) de stator à travers la surface périphérique (10) le long de directions périphériques mutuellement opposées (27) et s'additionne dans la zone des dents (8, 9) de stator et peut être guidé le long de la direction radiale (11) par l'intermédiaire des dents (8, 9) de stator et du rotor (2).

3. Moteur (1) selon la revendication 2, l'au moins un premier enroulement (14) et l'au moins un deuxième enroulement (15) étant connectés en parallèle l'un par rapport à l'autre.

4. Moteur (1) selon la revendication 2, l'au moins un premier enroulement (14) et l'au moins un deuxième enroulement (15) étant connectés l'un à l'autre en série.

5. Moteur (1) selon l'une des revendications précédentes, une multitude d'enroulements (14, 15) étant disposés dans chaque encoche (12, 13) de stator, au moins les enroulements (14, 15) d'une encoche (12, 13) de stator étant connectés entre eux en parallèle ou en série.

6. Moteur (1) selon l'une des revendications précédentes, au moins une dent (8, 9) de stator s'étendant en partant de la surface périphérique annulaire (10) le long d'une direction radiale (11) vers l'intérieur en direction du rotor (2) et jusqu'à une surface périphérique intérieure (20) de la dent (8, 9) de stator et comportant un effilement (34) par rapport à une direction périphérique(27) le long de cette extension (33).

7. Moteur (1) selon l'une des revendications précédentes, une distance minimale (18) entre une surface périphérique extérieure (19) du rotor (2) et une surface périphérique intérieure (20) des dents (8, 9) de stator étant comprise entre 5 et 20 millimètres.

8. Moteur (1) selon l'une des revendications précédentes, au moins une des dents (8, 9) de stator s'étendant au-delà de l'au moins une face frontale (6, 7) le long de la direction axiale (5) et formant un débord (40).

9. Moteur (1) selon l'une des revendications précédentes, le rotor (2) comportant une structure (22) pour transporter un fluide (23) le long de la direction axiale (5) à travers un espace intermédiaire (24) formé entre le rotor (2) et le stator (4).

10. Ensemble (25) comprenant au moins un moteur (1) selon l'une des revendications précédentes et au moins une source de tension (26), le premier enroulement (14) et le deuxième enroulement (15) étant disposés l'un par rapport à l'autre et connectés de telle sorte qu'un courant électrique (16) peut les traverser dans des directions mutuellement opposées.
